(19) Europäisches Patentamt
European Patent Office
Office européen des brevets

(11) Publication number: **0 040 276**
**B1**

(12) # EUROPEAN PATENT SPECIFICATION

(45) Date of publication of patent specification: **06.03.85**

(51) Int. Cl.$^4$: **C 01 B 33/28**

(21) Application number: **80303065.9**

(22) Date of filing: **03.09.80**

(54) **Method of preparing low acidity alkali metal containing zeolites.**

(30) Priority: **19.05.80 US 151018**

(43) Date of publication of application:
**25.11.81 Bulletin 81/47**

(45) Publication of the grant of the patent:
**06.03.85 Bulletin 85/10**

(84) Designated Contracting States:
**DE FR GB IT NL SE**

(56) References cited:
**DE-A-2 062 571**
**DE-A-2 817 576**
**DE-A-2 901 081**
**DE-B-1 167 321**
**US-A-3 140 249**
**US-A-3 140 253**
**US-A-3 899 544**
**US-A-4 069 172**
**US-A-4 171 260**

(73) Proprietor: **MOBIL OIL CORPORATION**
**150 East 42nd Street**
**New York New York 10017 (US)**

(72) Inventor: **Chen, Nai Yuen**
**Forrest Central Drive, R.D.**
**Titusville New Jersey (US)**
Inventor: **Miale, Joseph Nicholas**
**25 Merritt Drive**
**Lawrenceville New Jersey (US)**
Inventor: **Shihabi, David Said**
**8 Moores Mill Mount Rose Road, RRI, Box 259-AL**
**Pennington New Jersey (US)**

(74) Representative: **Cooper, John Anthony**
**CARPMAELS & RANSFORD 43 Bloomsbury Square**
**London WC1A 2RA (GB)**

**EP 0 040 276 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

Field of the invention

This invention concerns the preparation of low acidity alkali metal containing zeolites.

Description of the prior art

Since the introduction of zeolite catalysts as exemplified by U.S. Patent No. 3,140,249, a large proportion of the capacity for catalytic cracking and hydrocracking has been converted to use of such highly active catalysts. The high activity catalysts are generally characterized by very low alkali metal content. Sodium, for example, is present as a cation in synthetic faujasites by reason of their manufacture. Expensive ion exchange operations are conducted to replace the sodium or other alkali metal by protons or poly-valent metal cations in the preparation of cracking and hydrocracking catalysts from synthetic faujasite.

It has been recognized that such zeolites can function as catalysts when containing a moderate percentage of sodium. Thus the Kimberlin and Gladrow Reissue Patent 26,188 exhibits data showing cracking activity of a faujasite from which only one-third of the sodium has been removed by ion exchange. The extremely high activity of such catalysts as zeolite ZSM-5 has been moderated for specialized purposes by using the zeolite in the partially sodium form. Such moderating is described in U.S. Patents 3,899,544; 4,171,260; and 4,188,282.

Conventional preparation of alkali metal exchanged zeolites has heretofore been conducted by using alkali metal salt solutions, such as aqueous solutions of sodium chloride. Techniques for exchanging zeolites are generally well known and described in many U.S. Patents such as 3,140,249; 3,140,251; and 3,140,253. Conventionally, alkali metal exchanged zeolites have been prepared by utilizing salts of strong acids, e.g., sodium chloride, sodium sulfate, sodium nitrate, etc. The use of such salts results in high levels of residual acid activity and thus less than complete exchange. It is also known that addition of a strong base to the exchange solution to control acid activity is very difficult to monitor and control. Furthermore, addition of too much strong base will result in destruction of zeolite crystallinity by virtue of caustic attack of the silica in the zeolite.

DE—A—2,901,081 discloses alkali metal exchange of faujasites of enhanced silica/alumina ratio, while DE—A—2,062,571 discloses the use of a salt such as sodium chloride to avert or correct zeolite pore occlusion by silica.

In accordance with the present invention there is now discovered novel methods of preparing low acidity alkali metal containing zeolites with complete alkali metal exchange and without undue loss in crystallinity. The zeolite in its pure crystallized form, or in its final form, e.g., pellets, extrudates, or beads in combination with a matrix material, is exchanged with alkali metal at a pH between 7 and 12 at temperatures ranging from between about room temperature and the boiling point of the salt solution, using for the exchange either an alkali metal salt of a strong acid, e.g., NaCl, together with an alkali metal hydroxide, e.g. NaOH, or an alkali metal salt of a weak acid or a mixture of weak acids, e.g., phosphates, borates, oxolates, acetates, aluminates, carbonates, bicarbonates, etc.

Zeolites that can be exchanged according to this invention are ZSM-5 (U.S. Patent No. 3,702,886), ZSM-11 (U.S. Patent No. 3,709,979), ZSM-12 (U.S. Patent No. 3,832,449), ZSM-35 (U.S. Patent No. 4,016,245), ZSM-38 (U.S. Patent No. 4,046,859), ZSM-20 (U.S. Patent No. 3,972,983), ZSM-4 and Beta. ZSM-5 is a most particularly preferred zeolite as a candidate for alkali metal exchange according to the method of the present invention.

The novel methods of the instant invention are applicable to zeolites in their pure as crystallized state, i.e., zeolites in powder form. The zeolites can be in the acid form, e.g., hydrogen form, or basic form, e.g., ammonium form. Furthermore, said zeolites can be treated in accordance with this invention when incorporated with another material. Such material is usually resistant to temperature and other processing conditions and is usually a matrix material. Matrix materials are very useful as catalyst binders to impart greater resistance to the zeolite and to allow the catalyst to be formed in various shapes and sizes. Thus zeolite matrix composites in the forms of beads, tablets, extrudates, spheres, etc., can be treated according to the instant invention. Useful matrix materials include both synthetic and naturally occurring substances, as well as inorganic materials such as clay, silica and silica plus metal oxides. The latter may be either naturally occurring or in the form of gelatinous precipitates or gels including mixtures of silica and metal oxides. Naturally occurring clays which can be composited with the zeolite include those of the montmorillonite and kaolin families, which families include the subbentonites and the kaolins commonly known as Dixie, McNamee-Georgia and Florida clays or others in which the main mineral constituent is halloysite, kaolinite, dickite, nacrite or anauxite.

Such clays can be used in the raw state as originally mined or initially subjected to calcination, acid treatment or chemical modification.

In addition to the foregoing materials, the zeolites employed herein may be composited with a porous matrix material, such as alumina, silica-alumina, silica-magnesia, silica-zirconia, silica-thoria, silica-berylia, and silica-titania, as

well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix on an anhydrous basis may vary widely with the zeolite content ranging from between about 1 to about 99 percent by weight and more usually in the range of about 5 to about 80 percent by weight of the dry composite.

Alkali metals that can be exchanged in accordance with this invention include lithium, sodium, potassium, rubidium, cesium and francium; sodium being the preferred alkali metal.

The novel treatment method of the instant invention involves alkali metal exchange of zeolites within the pH range of between 7 and 12 at temperatures ranging from room temperature up to the boiling point of the particular alkali metal salt utilized. In one particular embodiment of this invention, an alkali metal salt of a strong acid can be used in conjunction with a strong alkali metal base having the same alkali metal as the salt. The addition of the base is carefully controlled so as not to allow the treatment solution to fall outside that prescribed pH range. One method of accomplishing this careful control is to dropwise add base while simultaneously monitoring the solution pH. In accordance with this embodiment, a salt of a strong acid such as a chloride, sulfate, nitrate, etc., would be used in conjunction with a strong base such as an hydroxide. A typical sodium treatment could be conducted using sodium chloride and dropwise addition of sodium hydroxide. The amount of hydroxide added would depend on the desired particular pH within the above given range.

An alkali metal salt of a weak acid, or a mixture of alkali metal salts of different weak acids, can be employed. Such salts would include such non-limiting examples such as carbonates, phosphates, borates acetates and aluminates. The particular salt or salts utilized and the amount of salt solution required would depend on the desired pH within the given range of 7 to 12. Without wishing to be bound by any particular theory of operability, it is believed that conventional exchange methods using solutions of salts derived from strong acids, e.g., nitrates, chlorides, sulfates, etc., which were not modified by bases, contain hydronium ions which compete with the alkali metal ions (these solutions have pH values well below 7). This competition limits exchange to no more than about 98% of the exchangeable sites ($M^+AlO_2$—≤0.98 where M represents the alkali metal ion). These hydronium occupied sites become acid sites on calcination.

In another embodiment of this invention alkali metal containing bicarbonate solution can be employed either with or without other alkali salts of weak acids. If used alone, alkali metal bicarbonate can result in a pH of about 8 and when used in combination with other alkali salts of weak acids the pH can be adjusted either above or below 8. The bicarbonate containing solutions are self-buffering and therefore have the advantage of maintaining an almost constant pH during treatment. The utilization of alkali bicarbonate containing solutions with prior pH calibration for proper concentrations allows for automatic pH control without resorting to constant pH monitoring of the exchange solution. Without wishing to be bound by any particular theory of operationality, it is felt that the unique buffering action of bicarbonate is due to the fact that the acid by-product of the exchange, carbonic acid, decomposes to water and carbon dioxide (a non-acid medium).

The amount of alkali metal containing bicarbonate solution required is that amount to provide ample alkali metal to attain 100 percent exchange. It is preferred to add an excess of the solution to insure proper exchange and pH control. It is also preferred to use an aqueous solution of said bicarbonate.

The alkali metal exchange zeolites produced in accordance with this invention are characterized by having a low acidity. One procedure to measure the acid activity of zeolites is the alpha test. Such test is defined in JOURNAL OF CATALYSIS, Volume VI, pages 278—287 (1966). To measure low acid activity catalysts with alpha values less than 1, the cyclopropane isomerization test has proved to be particularly useful. This cyclopropane isomerization test is generally conducted at a temperature of about 250°C (480°F) at He/cyclopropane mole ratio of about 4, a flow rate of about 10 to 100 ml/minute over 10—50 mg of catalyst and at conversion levels of about 5 to 60% of the cyclopropane feed. The catalyst is crushed and mixed with 1 ml 30/60 mesh vycor (acid treated and air calcined). The rate constants are determined. A silica alumina of activity $\alpha=1$ has a rate constant$^k$, of 63.5 $sec.^{-1}$ for cyclopropane isomerization. The cyclopropane isomerization index (CPI) for the silica alumina is assumed to be 1000. The CPI for any material tested is 100k÷63.5. An activity of less than 0.5 alpha corresponds to a CPI value of less than about 200.

The low acidity alkali exchanged zeolites prepared according to the novel method of the present invention are useful as hydrocarbon conversion catalysts, catalyst supports, and adsorbents.

The following examples will serve to illustrate the invention without limiting same.

Example 1

A sodium silicate solution was prepared by mixing 16 parts water and 27.7 parts sodium silicate (28.7 wt % $SiO_2$, 8.9 wt % $Na_2O$, 62.4 wt % $H_2O$) followed by addition of 0.08 parts Daxad 27 (W. R. Grace Chemical Division). The

solution was cooled to approximately 15°C (60°F).

An acid solution was prepared by adding 1 part aluminum sulfate (17.2 wt % $Al_2O_3$) to 16.4 parts water followed by 2.4 parts sulfuric acid (93 wt % $H_2SO_4$) and 1.2 parts NaCl.

These solutions were mixed in an agitated vessel while 3.9 parts of NaCl were added. The gel molar ratios expressed as oxides are the following:

$$SiO_2/Al_2O_3=78.4$$

$$Na_2O/Al_2O_3=49.5$$

The gel was then heated to about 93°C (200°F), agitation was reduced and an organic solution containing 0.8 parts n-propyl bromide and 1.5 parts methylethyl ketone was added to the gel. After these organics were added, 2.3 parts of n-propyl amine was added to the organic phase above the gel. This mixture was held at about 93°C (200°F) for 6 hours, then severe agitation was resumed. Crystallization was conducted at 93—99°C (200—210°F) until the gel was 80% crystallized, at which time temperature was increased to 150—160°C (302—320°F). Unreacted organics were removed by flashing and the remaining contents cooled. The zeolite slurry product was diluted with 4—5 parts water per part slurry and 0.0002 parts of flocculent (Rohm & Haas, Primafloc C-7) per part slurry, allowed to settle and supernatent liquid was drawn off. The settled solids were reslurried to the original volume of the preceeding step with water and 0.00005 parts of flucculant per part slurry. After settling, the aqueous phase was decanted. This was repeated until the sodium level of the zeolite was less than 0.10 wt %. Then 0.1 parts ammonium nitrate per part slurry were added to the settled solids and the water from the previous decantation. This mixture was reslurried and the solids were allowed to settle. The washed zeolite solids were filtered, identified as ZSM-5 by X-ray diffraction, and analyzed as having a $SiO_2/Al_2O_3$ mole ratio of 63.4 and a sodium content of 0.02 wt % (dry basis).

Example 2

A sample of ZSM-5 as prepared according to Example 1 was calcined at 540°C (1000°F) for 2 hours in flowing helium and 1 hour in flowing air. An aliquot was converted to the ammonium form using 1 N $(NH_4)SO_4$ at reflux temperature. A 4 gram aliquot of the washed filter cake was exchanged with 150 ml of 0.3N NaCl over a six-day period, replacing the exchange medium twice daily.

Example 3

A 12 gram aliquot of the filter cake as prepared according to Example 2 was exchanged in accordance with Example 2 with the exception that the pH was adjusted to and maintained at a value of 10 by dropwise addition of 0.1 N NaOH solution with frequent pH monitoring. Overnight pH was adjusted to pH-11 to maintain a high pH during the unmonitored period.

Example 4

A sample of 65% HZSM5/35% $Al_2O_3$ extrudate was converted to the ammonium form by saturating with dry $NH_3$, then treated with NaCl/NaOH as in Example 3 to attain a pH of 10/11.

Example 5

A sample of ZSM-5 prepared according to the general procedure of Example 1 and calcined at 540°C (1000°F) in air to produce HZSM-5. The HZSM-5 was then treated with 0.3 N NaCl solution and with dropwise addition of 0.1 N NaOH solution with frequent pH monitoring to arrive at a pH of 8.0.

Example 6

A 15 gram of ZSM-5 as prepared according to Example 1 and then calcined to form HZSM-5 was subjected to the same treatment as in Example 2, except in 1N $NaHCO_3$ aqueous solution was utilized in place of the NaCl solution. No NaOH addition was required to maintain the pH at a constant value of 8.

Example 7

A sample of ZSM5 as prepared according to Example 1 and calcined to the hydrogen form was ball milled with silica-alumina (as a matrix) in the ratio of 40 parts by weight zeolite to 60 parts by weight silica-alumina. The mixture was pelleted and sized to 14/30 mesh. It was then treated with 1 N $NaHCO_3$ as in Example 6.

Example 8

A 4 gram sample of ZSM-5 as prepared according to Example 1 was calcined at 540°C (1000°F) for 2 hours in flowing helium and 1 hour in flowing air. The resultant HZSM-5 was treated with a mixture of equivalent $NaHCO_3$ and $Na_2CO_3$ solutions with a combined pH of 9.2. This pH level remained constant throughout the test period.

Example 9

A 7 gram sample of ZSM-5 as prepared according to Example 1 was calcined at 540°C (1000°F) for 2 hours in flowing helium and 1 hour in flowing air. The HZSM-5 sample was then treated with 1 N $Na_2HPO_4$ (pH=9.2). The solution pH dropped to 8.2 where it then remained constant. When the exchange solution was replaced with fresh 1 N $Na_2HPO_4$, the pH level was raised to 9.2 and remained constant at that level.

Example 10—17

In these examples 2—9, the alkali

exchanged zeolites of Examples 2—9 were subjected to tests to ascertain their degree of crystallinity after treatment as compared to before treatment and their resultant residual acid activity.

The zeolites were measured for crystallinity before and after treatment by conventional X-ray techniques. Furthermore, the alkali metal exchanged zeolites were tested for residual acid acidity using the cyclopropane isomerization test at the conditions of 250°C (480°F), 4:1 helium/cyclopropane ratio and flow ratio and flow rates to maintain conversion of about 5 to about 60% of the cyclopropane teed. The results of these tests are given in Table 1 hereinbelow.

The results of Table 1 clearly show that the zeolites treated according to the methods of this invention (Examples 11—17) are well within the required acid activity range (cyclopropane isomerization index of less than 300). The exchange zeolite prepared according to conventional means (Example 10), however, exhibits a very high residual acid activity.

TABLE 1

| Example No. | Catalyst Treatment According to Example No. | Catalyst Treatment | Catalyst or Zeolite Type | pH | Cyclopropane Isomerization Index. CPI | Crystallinity (% of Parent) |
|---|---|---|---|---|---|---|
| 10 | 2 | NaCl | $NH_4ZSM$-5 | 6.3 | 2000* | 100 |
| 11 | 3 | NaCl/NaOH | $NH_4ZSM$-5 | 10/11 | 10* | 91 |
| 12 | 4 | NaCl/NaOH | 65% HzSM-5/ 35% $Al_2O_3$ extrudate | 10/11 | 15 | 82 |
| 13 | 5 | NaCl/NaOH | HZSM-5 | 8 | 20* | 104 |
| 14 | 6 | $NaHCO_3$ | HZSM-5 | 8 | 12* | 102 |
| 15 | 7 | $NaHCO_3$ | 40 wt % of HZSM-5 milled with 60 wt % of silica-alumina to form pellets (14/30 mesh) | 8 | 9 | — |
| 16 | 8 | $NaHCO_3/Na_2CO_3$ | HZSM-5 | 9.2 | 5 | — |
| 17 | 9 | $Na_2HPO_4$ | HZSM-5 | 9.2/8.2 | 1.5 | — |

*Estimated values

## Claims

1. A method of preparing a catalyst having an activity alpha, below 0.5 and comprising zeolite ZSM-4, -5, -11, -12, -20, -35, -38 or beta, said method comprising exchanging the zeolite with alkali metal characterised by the fact that exchange is carried out at a pH between 7 and 12 using an alkali metal salt of a weak acid, or an alkali metal salt of a strong acid together with an alkali metal hydroxide.

2. A method according to claim 1 wherein the alkali metal is sodium.

3. A method according to claim 1 or claim 2 wherein the alkali metal of said salt of a strong acid and that of said hydroxide are the same.

4. A method according to claim 3 wherein said salt is sodium chloride.

5. A method according to claim 1 or claim 2 wherein a mixture of salts of weak acids is used.

6. A method according to any of claims 1, 2 or 5 wherein the salt of a weak acid is a phosphate, borate, oxalate, acetate, aluminate, carbonate and/or bicarbonate.

7. A method according to claim 5 or claim 6 wherein a carbonate-bicarbonate solution is used.

8. A method according to any preceding claim wherein the zeolite subjected to exchange is in the hydrogen or ammonium form.

9. A method according to any preceding claim wherein the zeolite is in the form of a composite with a binder.

10. A method according to any preceding claim wherein the binder is alumina.

## Patentansprüche

1. Verfahren zur Herstellung eines Katalysators mit einer $\alpha$-Aktivität unterhalb von 0,5 mit einem Zeolithen ZSM-4, -5, -11, -12, -20 -35, -38 oder $\beta$, wobei das Verfahren das Austauschen des Zeolithen mit einem Alkalimetall umfaßt, gekennzeichnet dadurch, daß der Austausch bei einem pH zwischen 7 und 12 unter Verwendung eines Alkalimetallsalzes einer schwachen Säure oder eines Alkalimetallsalzes einer starken Säure zusammen mit einem Alkalimetallhydroxid durchgeführt wird.

2. Verfahren nach Anspruch 1, bei dem das Alkalimetall Natrium ist.

3. Verfahren nach Anspruch 1 oder Anspruch 2, bei dem das Alkalimetall des genannten Salzes einer starken Säure und das des genannten Hydroxids gleich sind.

4. Verfahren nach Anspruch 3, bei dem das genannte Salz Natriumchlorid ist.

5. Verfahren nach Anspruch 1 oder Anspruch 2, bei dem eine Mischung von Salzen schwacher Säuren verwendet wird.

6. Verfahren nach irgendeinem der Ansprüche 1, 2 oder 5, bei dem das Salz einer schwachen Säure ein Phosphat, Borat, Oxalat, Acetat, Aluminat, Carbonat und/oder Bicarbonat ist.

7. Verfahren nach Anspruch 5 oder Anspruch 6, bei dem eine Carbonat-Bicarbonat-Lösung verwendet wird.

8. Verfahren nach einem beliebigen vorausgehenden Anspruch, bei dem der dem Austausch unterzogene Zeolith in der Wasserstoff- oder Ammonium-Form vorliegt.

9. Verfahren nach einem beliebigen vorausgehenden Anspruch, bei dem der Zeolith in Form eines Verbundmaterials mit einem Bindemittel vorliegt.

10. Verfahren nach einem beliebigen vorausgehenden Anspruch, bei dem das Bindemittel Aluminiumoxid ist.

## Revendications

1. Un procédé de préparation d'un catalyseur présentant une activité alpha inférieure à 0,5 et comprenant une zéolite ZSM-4, -5, -11, -12, -20, -35, -39 ou béta, ledit procédé consistent à échanger la zéolite avec un métal alcalin, caractérisé par le fait que l'échange est mis en oeuvre à un pH compris entre 7 et 12 à l'aide d'un sel de métal alcalin d'un acide faible ou d'un sel de métal alcalin d'un acide fort associé à un hydroxyde de métal alcalin.

2. Un procédé selon la revendication 1, dans lequel le métal alcalin est le sodium.

3. Un procédé selon la revendication 1 ou la revendication 2, dans lequel le métal alcalin dudit sel d'acide fort et celcui de l'hydroxyde sont identiques.

4. Un procédé selon la revendication 3, dans lequel ledit sel est le chlorure de sodium.

5. Un procédé selon la revendication 1 ou la revendication 2 dans lequel est employé un mélange de sels d'acides faibles.

6. Un procédé selon l'une quelconque des revendications 1, 2 ou 5, dans lequel le sel d'acide faible est un phosphate, borate, oxalate, acétate, aluminate, carbonate, et/ou bicarbonate.

7. Un procédé selon la revendication 5 ou la revendication 6 dans lequel une solution de carbonate-bicarbonate est employée.

8. Un procédé selon l'une quelconque des revendications précédentes dans lequel la zéolite soumise à un échange est sous la forme protonée ou ammoniée.

9. Un procédé selon l'une quelconque des revendications précédentes dans lequel la zéolite est sous forme d'une composite avec un liant.

10. Un procédé selon l'une quelconque des revendications précédentes dans lequel le liant est l'alumine.